# EUROPEAN PATENT APPLICATION

(11) **EP 0 897 835 A2**
(43) Date of publication of application: **24.02.1999**
(21) Application number: 98306522.8
(22) Date of filing: 17.08.1998
(51) Int. Cl.: B60R 21/00

(54) **Vehicle occupant sensing system**

(30) Priority: 22.08.1997 US 916844
(71) Applicant: BREED AUTOMOTIVE TECHNOLOGY, INC., Lakeland, FL 33807-3050 (US)
(72) Inventor: Lotito, James C., Warren, Michigan 48089 (US); Owen, Mathew W., Harperwoods, Michigan 48225 (US); Vivacqua, Raymond J., Northville, Michigan 48167 (US); Marker, Ronald A., Sterling Heights, Michigan 48314 (US)
(74) Representative: Croston, David

(57) **Abstract**

A vehicle occupant sensing apparatus for controlling operating characteristics of a vehicle's safety restraint system is provided. The apparatus has a first proximity sensor (70) emitting a field in a first direction and generating a first output signal indicative of the object and a second proximity sensor (74) emitting a second field in a second direction that is substantially towards the field in the first direction and generating a second output signal indicative of the object. A controller (62) receives the first and second output signals and generates a control signal that is used to control the operating characteristics of the vehicle's safety restraint system.

## Description

The present invention generally relates to vehicle occupant safety restraint systems, and more particularly to an apparatus and method for accurately sensing the presence and position of an object within the vehicle such that the operating characteristics of the safety restraint system provide maximum passenger protection.

Vehicle safety restraint systems include airbags that quickly inflate at the time of a crash. It is desirable to vary the deployment characteristics of the airbag or operating characteristics of other safety restraint components based on passenger presence and position Crash conditions may also dictate non-deployment of the airbag

A vehicle occupant's position can be determined to a limited extent by a single position sensor. The use of a single proximity sensor in order to determine occupant position and presence has several disadvantages. For example, while a single proximity sensor located in the instrument panel may indicate the distance of an object from the instrument panel, the single sensor cannot distinguish whether a small object (i.e. a hand) is close to the instrument panel or if the torso of the occupant is near the instrument panel. The location of the occupant's torso, as opposed to identification of an "object's" position within a sensor field is advantageous in determining the actions of a vehicle restraint system during a crash.

### BRIEF DESCRIPTION OF THE DRAWINGS

FIG. 1 is a vehicle restraint system including an occupant position sensing apparatus of a preferred embodiment of the present invention.

FIG. 2 is a flowchart illustrating the operation of the vehicle safety restraint system.

FIG. 3 is a capaciflector sensor utilized in a preferred embodiment of the present invention.

FIG. 4 is an interface circuit that is used to condition the output signal as received from a capaciflector sensor.

FIG. 5 is a seat position sensor utilized in a preferred embodiment of the present invention.

FIG. 6 is the controller of the vehicle restraint system in further detail.

FIG. 7 is a vehicle passenger compartment with an occupant positioned within the passenger seat for experimental determination of sensor voltages that correspond to occupant torso angles.

FIG. 8 is a graph illustrating the two proximity sensor voltages that correspond to the occupant torso angle for a mid-positioned seat.

### DETAILED DESCRIPTION OF THE INVENTION

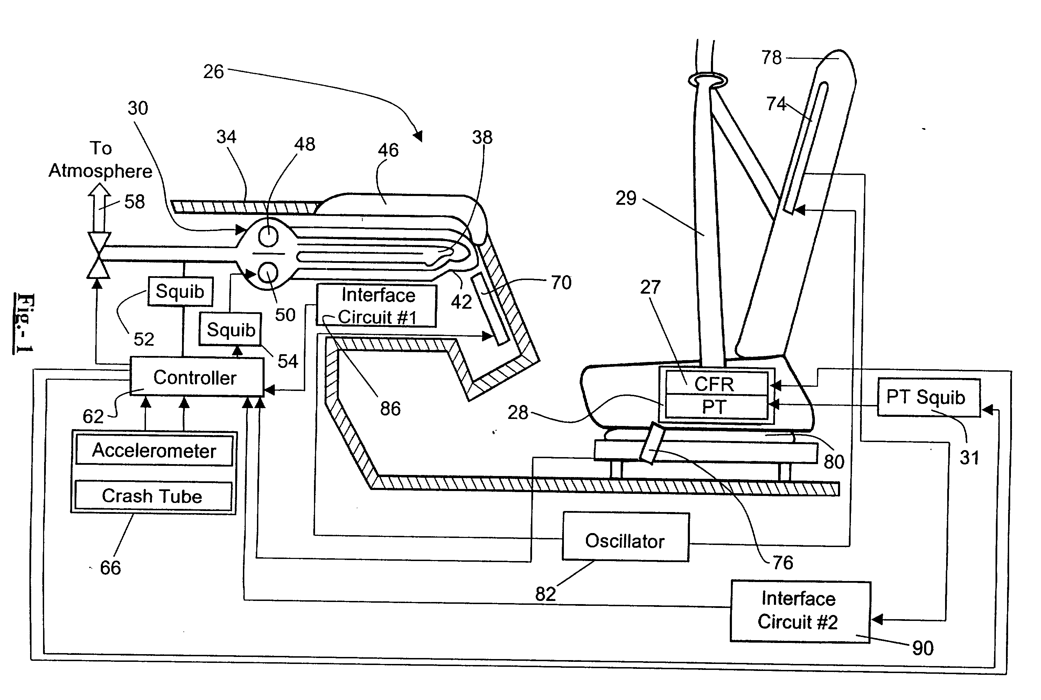

FIG. 1 shows a side view of a typical vehicle passenger compartment 26 having an occupant presence and position sensing apparatus in accordance with a preferred embodiment of the present invention that will be used to control the operating characteristics of the vehicle's safety restraint system. The vehicle safety restraint system includes a retractor 27, buckle pretensioner or belt tightener 28, and pretensioner squib 31 (which activates the pretensioner) for seat belt 29 control, and an airbag assembly 30 mounted in an instrument panel or instrument panel 34 of the compartment 26.

The airbag assembly 30 has an airbag 38 that is folded and stored within the interior of an airbag housing 42. A deployment door 46 covers the airbag 38 and is configured to open upon inflation of the airbag 38.

A first gas source 48 and second gas source 50 are mounted at the back of the housing 42 and operatively connected to the airbag 38. Gas from the first and/or second gas source (48,50) is provided to the airbag 38 such that the airbag 38 is filled to an inflated condition. Once inflated in response to an-impact event, the airbag 38 cushions an occupant positioned in the passenger compartment 26.

The gas sources (48,50) have electrically actuated ignitors, referred to as squibs. A first squib 52 and second squib 54, when activated, actuate the first and/or second gas sources (48,50) to produce or release inflation gas. The squibs (52,54) may be singularly activated, simultaneously activated, or activated in staged sequence to control the rate or degree of airbag 38 deployment as desired.

An electrically controlled vent valve 58 is also connected to the airbag assembly 30 such that when the vent valve 58 is electrically opened, a certain amount of gas from the gas sources (48,50) is vented to the atmosphere, thereby decreasing the amount of gas entering the airbag 38 and providing additional airbag inflation control.

The squibs (52,54), vent valve 58, retractor 27 and/or buckle pretensioner 28 (via the pretensioner squib 31) are electrically activated by a controller 62, such as a microcomputer, when a crash event is sensed. The controller 62 provides the necessary signals such that the appropriate dynamic inflation profile of the airbag is produced and the seat belt action is tuned for particular crash conditions and the presence and/or position of the vehicle occupant.

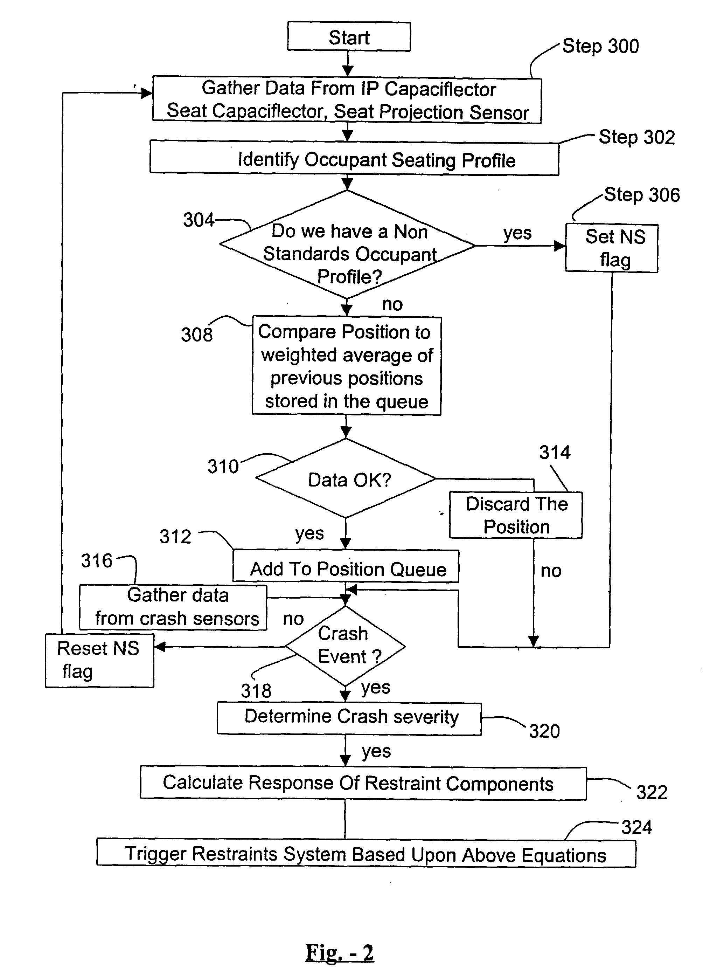

FIG. 2 presents an overview of the steps performed by the safety restraint system during an execution cycle of the controller. Initially, the controller gathers the voltages produced by an instrument panel capaciflector, seat capaciflector, and seat position sensor (step 300). Once these voltages are obtained, the seating profile of the occupant is identified using the gathered instrument panel voltage, seat capaciflector voltage and the seat position sensor voltage (step 302), as will be subsequently described in further detail.

Once the seating profile is identified, a determination is made as to whether the proximity sensors, in conjunction with the position sensor, indicates that a non-standard seating profile (step 304). Such a profile would be presented in situations where an seat occupant places a limb (i.e. feet or hand(s)) on the instrument panel while remaining seated. In the event that a non-standard seating profile is indicated, a non-standard flag is set (step 306), however, if a determination is made that the sensors indicate that a standard occupant profile exists, a data verification step is performed by comparing the currently identified position to a weighted average of previous positions (step 308). This is conducted in order to ensure that current position that has been determined is not anomalous (i.e. the measured occupant position is possible in view of the previous system readings).

If the data is determined to be within the range of possible positions (step 310), the identified position is added to a rotating storage queue that stores the most recent positions (step 312), otherwise the data is considered an anomaly and discarded (step 314). If the current position is considered to be unreliable, the weighted average may be used as the current position of the occupant or alternatively, a previous position that was considered to be reliable may be used.

Once the occupant position has been determined and this measurement has be verified, the system gathers information from crash sensors 66 that may include an accelerometer and/or a crash tube (see FIG. 1 step 316). With the crash sensor information, a determination is made as to whether a crash has occurred (318). If a crash condition does exist, the severity of the impact is calculated from the crash sensor inputs (step 320). Once the severity has been determined, this factor is utilized along with the position data in order to calculate the response of each individual restraint component (step 322). Based upon these calculated restraint responses, the system triggers the restraint components to maximize passenger protection (step 324).

Maximum passenger protection is available from this safety restraint system due to an accurate determination of occupant presence and position. Referring to FIG. 1, the controller receives presence and position information from the occupant presence and position sensing devices. The occupant presence and position sensing devices include a first proximity sensor 70 located in the front portion of the instrument panel 34, a second proximity sensor 74 mounted in the seat back 78, and a seat position sensor 76 mounted to the seat position track 80. The two proximity sensors (70, 74) are synchronously driven by an oscillator circuit 82. It is important that the two sensor are driven at the same frequency. If the two sensors are not driven in this manner, aliasing effects are created, thereby providing unstable fields by which to identify occupant position. A first interface circuit 86 and second interface circuit 90 condition the output signals produced by the first and second proximity sensors (70,74).

The proximity sensors used in the preferred embodiment of the present invention are capacitive proximity sensing elements, also known as capaciflectors. An illustration of a capaciflector 94 is shown in Figure 2. The capaciflector 94 has three conductive members with dielectric layers (not shown) interposed between the first 98 and second 106 conductive members and between the second 106 and third 110 conductive members. The first conductive member 98, also referred to as the ground plane, is connected to a vehicle ground 102. The second conductive member 106, also referred to as the shield electrode, is maintained at a voltage potential that is higher than vehicle ground 102. The second conductive member 106 is formed with a thin sheet of conductive material and located between the first conductive member 98 and a third conductive member 110.

The third conductive member 110, also known as the sensor electrode, is maintained in phase with the second conductive member 106 and at a voltage potential that is equal to or higher than the potential of the second conductive member 106. The third conductive member 110 reflects electric field lines 112 away from the grounded first conductive member 98 and toward a field intruding object 114. When the second and third conductive members (106,110) are energized, an extended electric field, generally indicated by reference number 118, is produced. This field 118 can extend several feet beyond the capaciflector 94 depending upon the voltages applied to the second and third conductive members (106,110). When an object 114 is introduced into the field 118, a negative electric charge is induced on the surface of the object 114. Therefore, the object 114 effectively becomes a capacitive electrode of the capaciflector 94 working in conjunction with the third conductive member 110.

The capaciflector 94 may be constructed of thin rigid or flexible conductive material having a suitable insulator, or can be constructed of a conductive polymer or metalized layer deposited on or incorporated into the fixtures of the vehicle. The size of the capaciflectors is dependent upon vehicle geometry, packaging restrictions, and the particular sensing resolution desired. Each capaciflector 94 may be a discreet component or integrated into other vehicle components (e.g., trim).

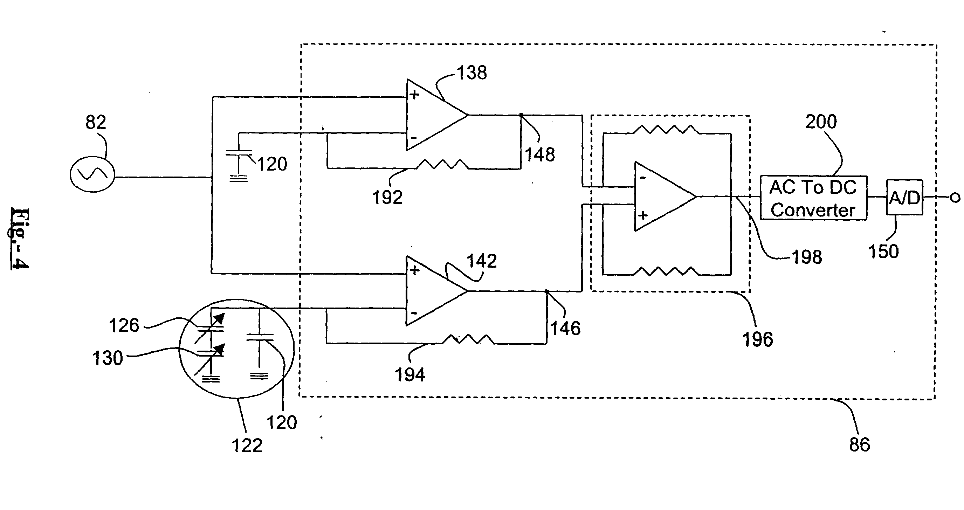

Referring to FIG. 4, the first interface circuit 86 is shown in further detail along with the equivalent capacitances (120,126,130) of the first proximity sensor. For purposes of brevity, only the first interface circuit 86 will be described in conjunction with the first proximity sensor (i.e. first capaciflector 70 as shown in FIG. 1). However, it will be understood that this description applies equally to the second proximity sensor and the second interface circuit (i.e. second capaciflector 90 and second interface circuit as shown in FIG. 1).

The first interface circuit 86 has a first amplifier 138 and a second amplifier 142 that are arranged in the form of current followers. The oscillator 82 drives the first amplifier 138 and the second amplifier 142 at a substantially constant frequency of approximately 20 KHz. The feedback loop 192 of the first amplifier 138 and the feedback loop 194 of the second amplifier 142 include the effective capacitances of the first proximity sensor. Specifically, the first amplifier 138 is provided the equivalent capacitance of the second conductive member of the capaciflector to ground (Csg1) 120, and the second amplifier 142 is provided an equivalent capacitance (Ceff1) 122 having three components.

The three components of the equivalent capacitance (Ceff1) 122 are the third member to ground capacitance (Cso1) 126, the object to ground capacitance (Cog1) 130, and the second member to ground capacitance (Csg1) 120.

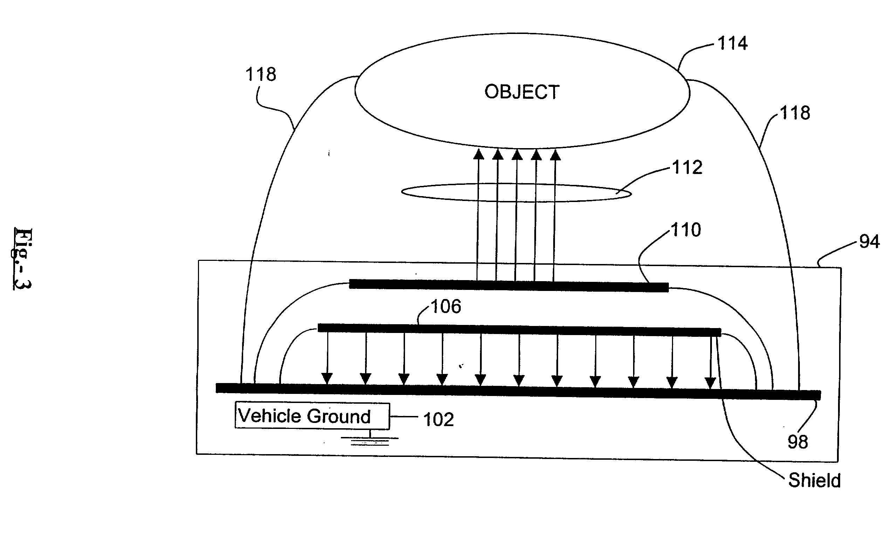

As previously indicated in the description of the capaciflector structure (see description in relation to FIG. 3), when an object is introduced into the field extending from the capaciflector, a negative charge is induced on the surface of the object, thereby effectively transforming the object into the third conductive member of the capaciflector. As the distance between the object and the capaciflector changes, the effective capacitance between the third member and the object (Cso1) 126, and the effective capacitance between the object and the vehicle ground changes. This in turn changes the effective capacitance (Ceff1) 122 provided to the second amplifier 142. This change in the effective capacitance (Ceff1) 122 alters the current in the feedback loop 194 of the second amplifier 142 and produces a second amplifier output 146.

The equivalent capacitance of the second conductive member to ground (Csg1) 120, that is provided to the first amplifier 138 does not vary with the introduction of an object into the capaciflector field. Additionally, when an object is not present, the voltage potential at the first amplifier output 148 is substantially the same as the voltage potential at the second amplifier output 146, since the series combination of (Cso1) 126 and (Cog1) 130 does not exist. Therefore, when no object is present, the first amplifier output 148 and the second amplifier output 146 is summed by the summing circuit 196, with a result of approximately 0 volts appearing at the output 198. However, as the second amplifier output 146 changes when the object is introduced into the capaciflector field, a voltage differential will be produced by the summing circuit 196 which is representative of the distance of the object from the third conductive member of the capaciflector. This voltage differential appearing on output 198, is an AC signal which is then converted to a DC with a AC-to-DC converter 200. The resulting DC signal is sampled by an analog to digital converter (ADC) 150 and transformed for further processing by the controller 62.

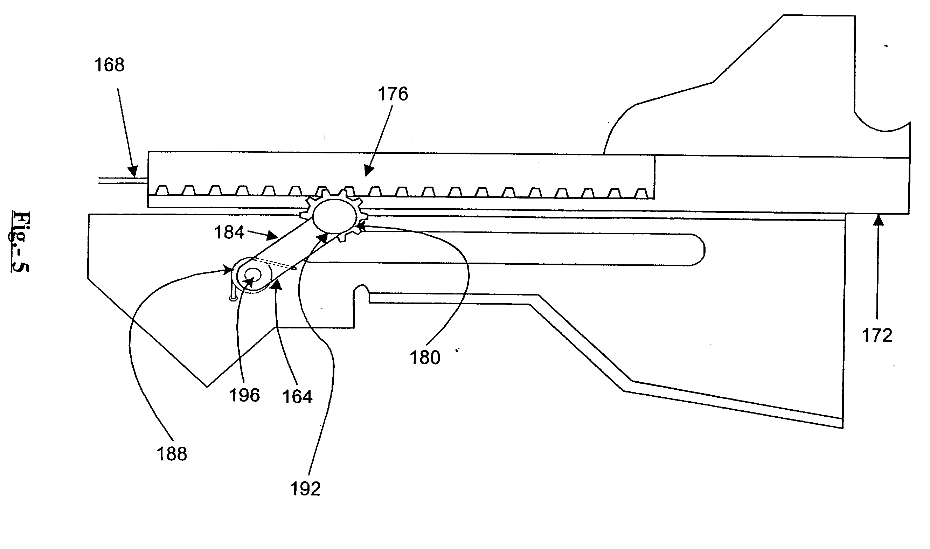

In addition to the controller receiving dc signals from the first interface circuit 86 and second interface circuit 90, a dc signal is provided by the seat position sensor 164 (see FIG. 1). Referring to FIG. 5, the seat position sensor 164 is found in the seat track region of the seat assembly. Seat tracks are generally formed of a fixed lower track portion 168 and a translatable upper track portion 172. A rack 176 is provided which is integral to the upper track 172. The sensor mechanism is formed of a gear 180 on an idler arm 184 which is rotatably mounted to the non-movable portion of the seat, typically the lower track 168, and a biasing spring 188 used to engage the gear with the rack.

A multi-turn potentiometer 192 is coupled to the gear 180 and is used to measure the number of revolutions of the gear 180. Fore and aft position changes of the seat translate the rack 176 which causes the gear 180 to rotate. As the gear 180 rotates, the coupled multi-turn potentiometer 192 rotates causing a corresponding change in the resistance of the potentiometer 192, thereby altering the voltage generated by this sensor. This measured change in voltage correlates into a measurement of the lateral translation of the seat. An additional single turn potentiometer 196 can be coupled to the idler arm in the region of the pivot point. This potentiometer 196 may be used to measure the angular rotation of the idler arm. The measured change in rotation of the idler arm 184 in turn will correspond to the height of the seat in seats equipped with height adjustment.

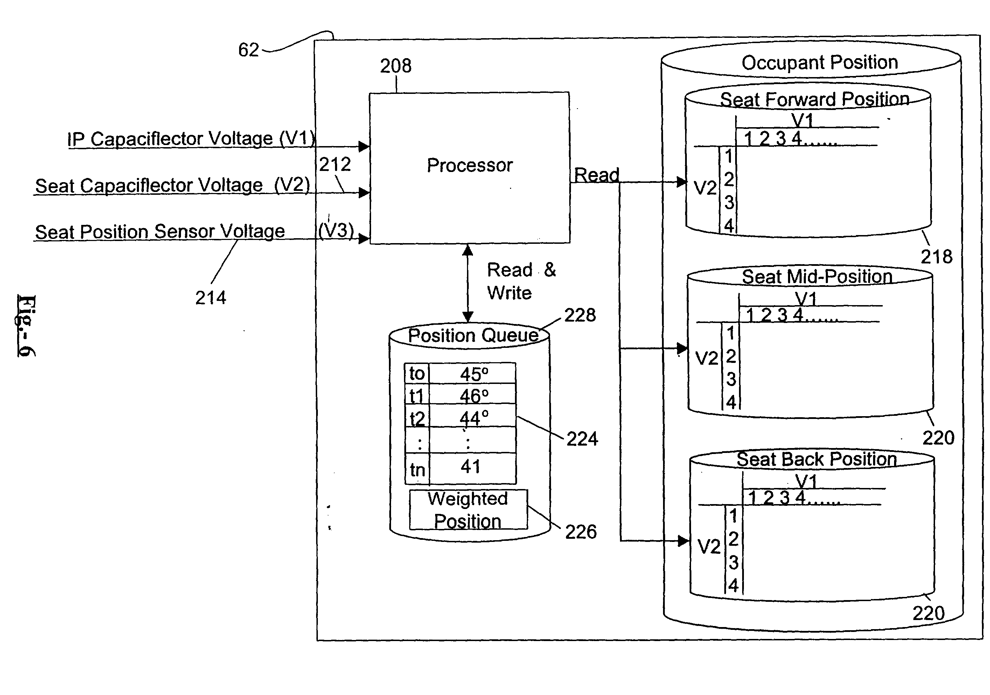

Once the instrument panel capaciflector voltage, seat capaciflector voltage, and seat position sensor voltage are obtained, the controller determines the position of the occupant in the seat. Referring to FIG. 6, the controller 62 is shown in further detail. As can be seen, a processor 208 of the controller 62 receives the instrument panel capaciflector voltage 210, seat capaciflector voltage 212 and seat position sensor voltage 214. The processor 208 then accesses an occupant position memory storage device 216 that contains a seat forward-position data structure 218, seat mid-position data structure 220, and seat back-position data structure 222, with each data structure (218, 220, and 222) containing pre-generated data that provides an occupant torso angle for a corresponding instrument panel capaciflector voltage 210 and seat capaciflector voltage 212.

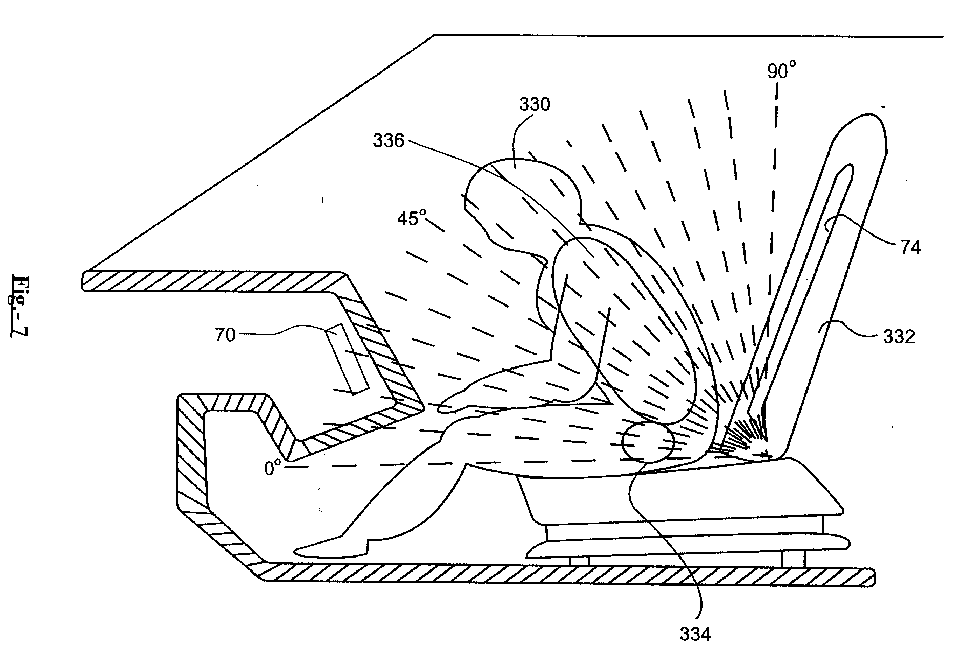

In this description, the data contained in the data structures (218, 220, 222) is developed through experimental process. However, it should readily understood this data may be determined empirically, including generation through computer modeling. FIG. 7 illustrates an experimental set up for generating occupant position data. As can be seen, an occupant 330 is placed in the seat 332 and pivots about the hip 334 such that the torso 336 is moved through the possible torso angles (i.e. 90 degrees to 0 degrees). While the occupant is pivoting, the voltages from the instrument panel capaciflector 70 and seat capaciflector 74 are measured and stored.

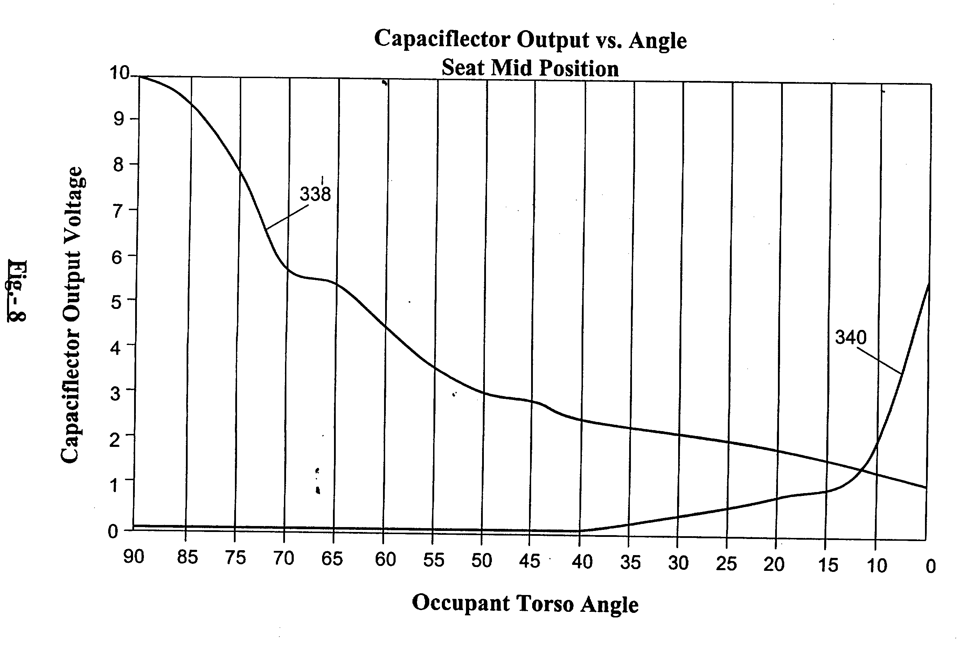

FIG. 8 illustrates the measured voltages of these two capaciflectors for a particular occupant torso angle when the seat is in a mid-position. As would be expected, the voltage of the seat capaciflector is at a high potential when the occupant torso angle is 90 degrees, thereby indicating that the occupant is in an upright position against the seat back. As the occupant bends forward, the voltage from the seat capaciflector decreases, and as the torso enters the field of the instrument panel capaciflector, the voltage of the instrument panel capaciflector 340 increases. This experimental measurement process and storage is then repeated for different seat positions, with the generated data stored in the occupant position memory storage device 216 for subsequent access by the processor. As can be seen, these two capaciflector voltages may be used to accurately determined an occupant torso angle (e.g. a 2 volt output by the seat capaciflector and a 1 volt output by the instrument pantel capaciflector indicates a occupant torso angle of 15 degrees.)

Referring to FIG. 6, the processor accesses the appropriate data structure (218, 220, 222) based upon the seat position sensor voltage 214. Once the appropriate structure (218, 220, 222) has been accessed, the occupant torso angle is identified based upon a table lookup operation using the seat back and instrument panel capaciflector voltages. The selected torso angle (i.e. occupant position) is then verified against previously identified occupant positions 224 and a weighted position 226 stored in the position queue 228. Once these actions have been completed by the processor 208, additional tasks of the safety system are performed, including identification of a crash and determination of crash severity.

From the foregoing, it can be seen that a system and methodology for accurately determining occupant presence and position for a vehicle safety restraint system is provided. This system may be used to control the dynamic performance of various safety restraint components in the vehicle so that the actions of these safety restraint components may be tailored or matched to the occupants seating position and severity of an accident, thereby maximizing passenger protection in a vehicle crash.

## Claims

1. An occupant sensing apparatus for controlling operating characteristics of a vehicle's safety restraint system, comprising:
a first proximity sensor (70) emitting a field in a first direction and generating a first output signal indicative of the object;
a second proximity sensor (74) emitting a second field in a second direction that is substantially towards the field in the first direction and generating a second output signal indicative of the object; and
a controller (62) receiving the first and second output signals and generating an control signal that is used to control the operating characteristics of the vehicle's safety restraint system.
